# EUROPEAN PATENT APPLICATION

(11) **EP 4 701 196 A1**
(43) Date of publication of application: **25.02.2026**
(21) Application number: 24791925.1
(22) Date of filing: 12.04.2024
(51) Int. Cl.: H04N 19/91

(54) **POINT CLOUD CODING PROCESSING METHOD, POINT CLOUD DECODING PROCESSING METHOD, AND RELATED DEVICE**

(30) Priority: 19.04.2023 CN 202310422423
(71) Applicant: Vivo Mobile Communication Co., Ltd., Dongguan, Guangdong 523863 (CN)
(72) Inventor: ZHANG, Wei, Dongguan, Guangdong 523863 (CN); WANG, Guiqi, Dongguan, Guangdong 523863 (CN); YANG, Fuzheng, Dongguan, Guangdong 523863 (CN); LV, Zhuoyi, Dongguan, Guangdong 523863 (CN)
(74) Representative: Lavoix
(86) International application number: PCT/CN2024/087352
(87) International publication number: WO 2024/217340

(57) **Abstract**

This application discloses a point cloud encoding processing method, a point cloud decoding processing method, and a related device, and belongs to the field of computer technologies. The point cloud encoding processing method in embodiments of this application includes: determining an attribute prediction mode of attribute information of a to-be-encoded point; obtaining an attribute prediction residual of the attribute information of the to-be-encoded point based on the attribute prediction mode; and performing entropy encoding on the attribute prediction residual by using attribute prediction mode information as a context, to obtain an encoding result of the to-be-encoded point, where the attribute prediction mode information indicates the attribute prediction mode.

## Description

### CROSS-REFERENCE TO RELATED APPLICATION

This application claims priority to Chinese Patent Application No. 202310422423.1 filed in China on April 19, 2023, which is incorporated herein by reference in its entirety.

### TECHNICAL FIELD

This application belongs to the field of computer technologies, and specifically, relates to a point cloud encoding processing method, a point cloud decoding processing method, and a related device.

### BACKGROUND

A point cloud is an expression form of a three-dimensional object or a scene, and includes a group of discrete point sets that are randomly distributed in space and that express a space structure and a surface attribute of the three-dimensional object or the scene. A large quantity of discrete points are required to accurately reflect information in space. To reduce bandwidth occupied when point cloud data is stored and transmitted, encoding and compression processing needs to be performed on the point cloud data. The point cloud data usually includes geometrical information that describes a position, for example, three-dimensional coordinates (x, y, z), and attribute information of the position, for example, composition like a color (R, G, B) or a reflectivity. During a compression process of point cloud encoding, the geometrical information and the attribute information are separately encoded. A process of encoding the attribute information includes entropy encoding on an attribute prediction residual.

In a related technology, in a process of performing entropy encoding on the attribute prediction residual, entropy encoding is directly performed on an attribute prediction residual of each to-be-encoded point, leading to low encoding efficiency.

### SUMMARY

Embodiments of this application provide a point cloud encoding processing method, a point cloud decoding processing method, and a related device, to resolve a problem of low encoding efficiency.

According to a first aspect, a point cloud encoding processing method is provided, performed by an encoder side, and including:
determining an attribute prediction mode of attribute information of a to-be-encoded point;
obtaining an attribute prediction residual of the attribute information of the to-be-encoded point based on the attribute prediction mode; and
performing entropy encoding on the attribute prediction residual by using attribute prediction mode information as a context, to obtain an encoding result of the to-be-encoded point, where the attribute prediction mode information indicates the attribute prediction mode.

According to a second aspect, a point cloud decoding processing method is provided, performed by a decoder side, and including:
determining an attribute prediction mode of attribute information of a to-be-decoded point; and
performing entropy decoding on an attribute prediction residual of the attribute information of the to-be-decoded point by using attribute prediction mode information as a context, to obtain a decoding result of the to-be-decoded point, where the attribute prediction mode information indicates the attribute prediction mode.

According to a third aspect, a point cloud encoding processing apparatus is provided, including:
a determining module, configured to determine an attribute prediction mode of attribute information of a to-be-encoded point;
an obtaining module, configured to obtain an attribute prediction residual of the attribute information of the to-be-encoded point based on the attribute prediction mode; and
an encoding module, configured to perform entropy encoding on the attribute prediction residual by using attribute prediction mode information as a context, to obtain an encoding result of the to-be-encoded point, where the attribute prediction mode information indicates the attribute prediction mode.

According to a third aspect, a point cloud decoding processing apparatus is provided, including:
a determining module, configured to determine an attribute prediction mode of attribute information of a to-be-decoded point; and
a decoding module, configured to perform entropy decoding on an attribute prediction residual of the attribute information of the to-be-decoded point by using attribute prediction mode information as a context, to obtain a decoding result of the to-be-decoded point, where the attribute prediction mode information indicates the attribute prediction mode.

According to a fifth aspect, a terminal is provided, where the terminal includes a processor and a memory, the memory stores a program or instructions that can be run on the processor, and when the program or the instructions is/are executed by the processor, the steps of the method according to the first aspect is implemented, or the steps of the method according to the second aspect is implemented.

According to a sixth aspect, a terminal is provided, including a processor and a communication interface, where the processor is configured to: determine an attribute prediction mode of attribute information of a to-be-encoded point; obtain an attribute prediction residual of the attribute information of the to-be-encoded point based on the attribute prediction mode; and perform entropy encoding on the attribute prediction residual by using attribute prediction mode information as a context, to obtain an encoding result of the to-be-encoded point, where the attribute prediction mode information indicates the attribute prediction mode.

According to a seventh aspect, a terminal is provided, including a processor and a communication interface, where the processor is configured to: determine an attribute prediction mode of attribute information of a to-be-decoded point; and perform entropy decoding on an attribute prediction residual of the attribute information of the to-be-decoded point by using attribute prediction mode information as a context, to obtain a decoding result of the to-be-decoded point, where the attribute prediction mode information indicates the attribute prediction mode.

According to an eighth aspect, a readable storage medium is provided, where the readable storage medium stores a program or instructions, and when the program or the instructions is/are executed by a processor, the processor performs the steps of the method according to the first aspect, or performs the steps of the method according to the second aspect.

According to a ninth aspect, an encoding/decoding system is provided, including an encoder side device and a decoder side device, where the encoder side device may be configured to perform the steps of the method according to the first aspect, and the decoder side device may be configured to perform the steps of the method according to the second aspect.

According to a tenth aspect, a chip is provided, where the chip includes a processor and a communication interface, the communication interface is coupled to the processor, and the processor is configured to execute a program or instructions to implement the method according to the first aspect or implement the method according to the second aspect.

According to an eleventh aspect, a computer program/program product is provided, where the computer program/program product is stored in a storage medium, and the computer program/program product is executed by at least one processor, to implement the steps of the method according to the first aspect or the steps of the method according to the second aspect.

In this embodiment of this application, the attribute prediction mode of the attribute information of the to-be-encoded point is determined; the attribute prediction residual of the attribute information of the to-be-encoded point is obtained based on the attribute prediction mode; and entropy encoding is performed on the attribute prediction residual by using attribute prediction mode information as a context, to obtain an encoding result of the to-be-encoded point, where the attribute prediction mode information indicates the attribute prediction mode. In this way, because the attribute prediction residual is obtained by using the attribute prediction mode, there is a correlation between the attribute prediction residual and the attribute prediction mode. When entropy encoding is performed on the attribute prediction residual, the attribute prediction mode information is used as the context. Entropy encoding is performed on the attribute prediction residual by using the correlation between the attribute prediction mode information and the attribute prediction residual, so that encoding efficiency is improved.

### BRIEF DESCRIPTION OF THE DRAWINGS

FIG. 1 is a diagram of a framework of a G-PCC codec in the related technology;
FIG. 2 is a diagram of a prediction mode in the related technology;
FIG. 3 is a flowchart of a point cloud encoding processing method according to an embodiment of this application;
FIG. 4 is a flowchart of a point cloud decoding processing method according to an embodiment of this application;
FIG. 5 is a diagram of a encoding test result according to an embodiment of this application; and
FIG. 6 is a diagram of a structure of a point cloud encoding processing apparatus according to an embodiment of this application;
FIG. 7 is a diagram of a structure of a point cloud decoding processing apparatus according to an embodiment of this application;
FIG. 8 is a diagram of a structure of a communication device according to an embodiment of this application; and
FIG. 9 is a diagram of a structure of a terminal according to an embodiment of this application.

### DETAILED DESCRIPTION

The following clearly describes the technical solutions in embodiments of this application with reference to the accompanying drawings in embodiments of this application. Apparently, the described embodiments are some of embodiments of this application rather than all of the embodiments. All other embodiments obtained by a person skilled in the art based on embodiments of this application fall within the protection scope of this application.

In this application, the terms "first" and "second" are used to distinguish similar objects, but are not used to describe a specific sequence or order. It is to be understood that terms used in this way are exchangeable in a proper case, so that embodiments of this application herein can be implemented in an order different from the order shown or described herein described. In addition, objects distinguished by "first" and "second" are generally of a same type, and a quantity of the objects is not limited. For example, a first object may be one object, or may be a plurality of objects. In addition, "or" in this application indicates at least one of connected objects. For example, "A or B" covers three solutions, namely, a solution 1: including A and excluding B; a solution 2: including B and excluding A; and a solution 3: including both A and B. The character "/" in this specification generally indicates an "or" relationship between associated objects.

The term "indication" in this application may be a direct indication (or an explicit indication) or an indirect indication (or an implicit indication). Herein, the direct indication may be understood as that a sending party explicitly informs, in sent indication, a receiving party of content like specific information, a to-be-performed operation, or a request result; and the indirect indication may be understood as that the receiving party determines corresponding information based on the indication sent by the sending party, or makes a judgment and determines a to-be-performed operation or request result based on a judgment result.

A codec end corresponding to the point cloud encoding processing method and the point cloud decoding processing method may be a terminal. The terminal may be referred to as a terminal device or user equipment (User Equipment, UE), and the terminal may be a terminal side device like a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile Internet device (Mobile Internet Device, MID), an augmented reality (augmented reality, AR)/virtual reality (virtual reality, VR) device, a robot, a wearable device (Wearable Device), an in-vehicle device (Vehicle User Equipment, VUE), and pedestrian user equipment (Pedestrian User Equipment, PUE). The wearable device includes a smart watch, a bracelet, a headset, glasses, and the like. It should be noted that a specific type of the terminal is not limited in embodiments of this application.

For ease of understanding, some contents in embodiments of this application are described below.

### 1. Geometry-based point cloud compression (Geometry-based Point Cloud Compression, G-PCC) encoder

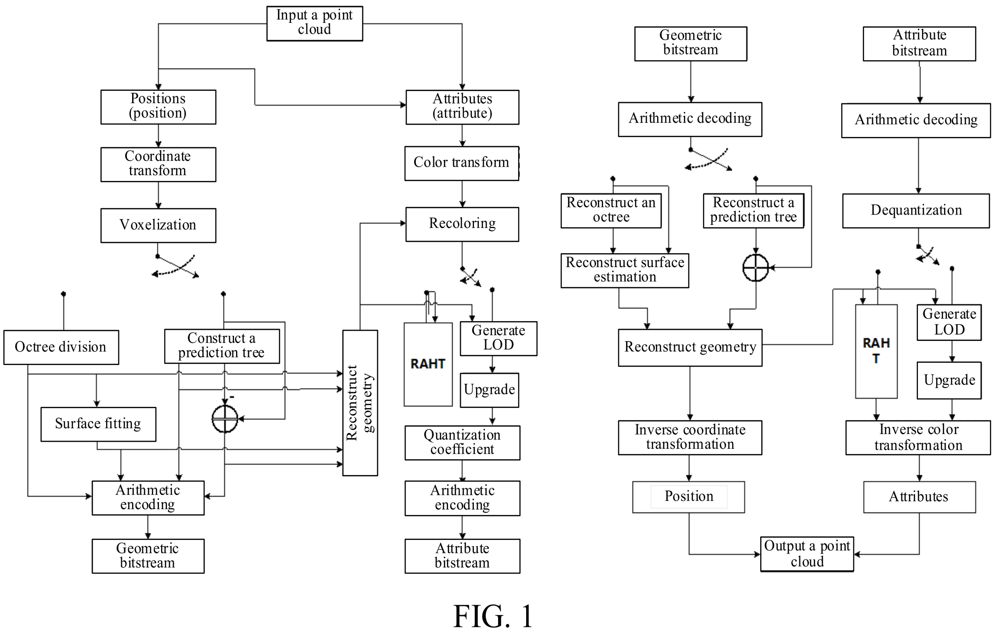

In a frame of a point cloud G-PCC encoder, geometrical information and attribute information of a point cloud are separately encoded. As shown in FIG. 1, currently, attribute encoding of G-PCC may be classified into region adaptive Harr transform based on upsampling prediction and upgrade transform based on hierarchical structure division. When not updated, the upgrade transform based on hierarchical structure division is referred to as predictive transform based on hierarchical structure division. Regardless of which encoding scheme is used, entropy encoding needs to be performed on a finally obtained transform coefficient or prediction residual by using arithmetic encoding.

The region adaptive Harr transform based on upsampling prediction includes: first, constructing a transformation tree structure. An octree structure is constructed from bottom to top from a lowest layer. In a process of constructing the transformation tree, corresponding Morton code information, attribute information, and weight information need to be generated for a combined node. Then, upsampling prediction and region adaptive Harr transform (Region Adaptive Harr Transform, RAHT) are performed layer by layer starting from a root node from top to bottom. If a current node is the root node, upsampling prediction is not performed, RAHT transform is directly performed on attribute information of the node, and then quantization and entropy encoding are performed on a direct current coefficient and an alternating current coefficient that are obtained through transform. If the current node is not the root node, whether to predict the current node is determined based on quantities of grandfather nodes and father nodes. If prediction needs to be performed, for the current to-be-encoded node, an attribute predicted value of a current to-be-encoded child node that is obtained by performing weighted prediction on a father node of the current to-be-encoded child node, a neighboring father node that is in-plane and collinear with the current to-be-encoded child node, and a neighboring child node that is in-plane and collinear with the current to-be-encoded child node is separately selected for child nodes of the current to-be-encoded node. Then, RAHT transform is respectively performed on the attribute predicted value and an original attribute value of the current to-be-encoded node, to obtain a residual of an AC coefficient through calculation, and then quantization and entropy encoding are performed on the residual of the AC coefficient. If prediction does not need to be performed, RAHT transform is directly performed on the original attribute value of the current to-be-encoded node, and quantization and entropy encoding are performed on an obtained AC coefficient, to finally obtain an attribute bitstream.

The upgrade transform based on hierarchical structure division includes: first, performing layer division on a to-be-encoded point cloud through level of detail division (Level of Detail, LoD), to establish a hierarchical structure of the point cloud. In this process, a bottom-level point is first encoded/decoded. Therefore, a high-level point may be predicted by using the bottom-level point and a reconstructed point of a same level, thereby implementing progressive encoding/decoding. Then, points at a bottom level and a same level are used as reference points. A to-be-encoded point is searched for in the reference points. K nearest reference points are selected as prediction reference points. Linear interpolation prediction is performed by using reconstructed attribute values of the K nearest neighbors, where a weight is a reciprocal of a Euclidean distance between a nearest neighboring point and the to-be-encoded point. Finally, upgrade transform is performed, and the upgrade transform includes three parts: segmentation, prediction, and update. In a segmentation step, spatial segmentation is performed on input point cloud data, to segment the input point cloud data into a high-level point cloud and a low-level point cloud. In a prediction step, attribute information of the high-level point cloud is predicted by using attribute information of the low-level point cloud, to obtain a prediction residual. In processes of segmentation and prediction, because a point in a lower LoD level has a higher weight due to a prediction policy in LoD division, an influencing weight of each point needs to be defined and recursively updated based on the prediction residual and a distance between a prediction point and a neighbor of the point, and a residual continues to be encoded to finally obtain a bitstream of attribute information.

The predictive transform based on hierarchical structure division includes: compared with the foregoing upgrade transform based on hierarchical structure division, only two parts, namely, segmentation and prediction are included, and update is not included. To further improve efficiency of point cloud attribute prediction, a rate-distortion optimization technology is further introduced to prediction transform. In rate-distortion optimization, different predicted values such as a single predictor predicted value and a weighted predicted value are obtained by using an attribute value of a predictor in a prediction set, and corresponds to different prediction modes. Finally, a prediction mode is selected in a rate-distortion method. Embodiments of this application are provided based on prediction transform.

### 2. Select a prediction mode through rate-distortion optimization

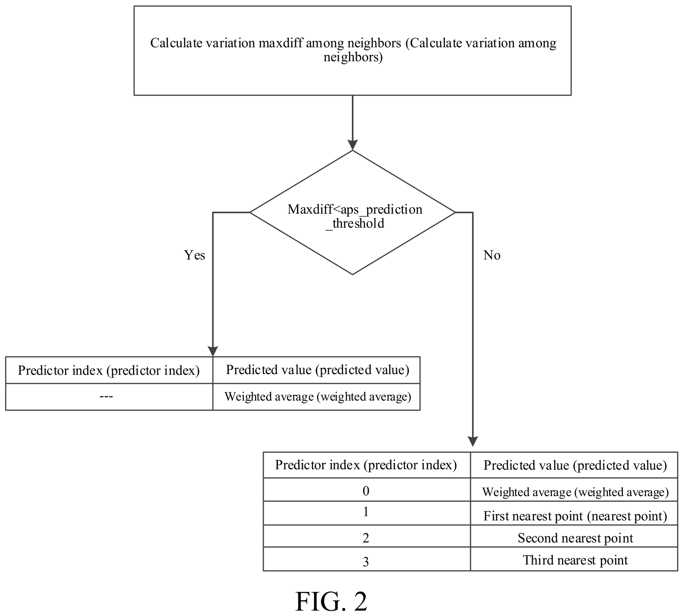

Currently, in G-PCC, a rate-distortion optimization technology is further introduced to prediction transform to further improve efficiency of point cloud attribute prediction. In rate-distortion optimization, different predicted values such as a single predictor predicted value and a weighted predicted value are obtained by using an attribute value of a predictor in a prediction set, and corresponds to different prediction modes. Finally, a prediction mode is selected in a rate-distortion method. Specifically, selection is shown in FIG. 2.

First, whether a maximum change maxdiff between neighbors in a prediction point set of a current to-be-encoded point is greater than a preset value aps_prediction_threshold is determined.

If the maximum change maxdiff is less than the preset value, a single prediction mode (singlepredmode) is used to perform weighted averaging on points in the prediction point set to obtain an attribute predicted value.

If the maximum change maxdiff is greater than or equal to the preset value, a multi prediction mode (mutipredmode) is used, and one of the following four modes is selected through rate-distortion optimization (Rate-distortion optimization, RDO).
Predmode0: performing weighted averaging on found three prediction points;
Predmode1: performing prediction by using a first neighbor;
Predmode2: performing prediction by using a second neighbor; and
Predmode3: performing prediction by using a third neighbor.

For single prediction (singlepred), there is only one prediction mode, namely, weighted averaging, and therefore, a prediction mode identifier (predmodeindex) is 0 by default, and no encoding is needed.

For multi prediction (mutipred), there are four prediction modes, and therefore, predmodeindex needs to be encoded. Currently, in G-PCC, the predmodeindex is not separately encoded, but is combined with a transform coefficient, and finally only a transform coefficient obtained through combination is encoded.

### 3. Arithmetic encoding

Currently, in G-PCC, a zero-run encoding manner is used for entropy encoding of attribute information (a reflectivity, a color, or the like). Reflectivity information is used as an example. When all transform coefficients are input, all the transform coefficients are traversed. First, whether the reflectivity information (transform coefficient) is 0 is determined, and if the reflectivity information (transform coefficient) is 0, a length value is ++; or if not all transform coefficients are 0, a current length value is encoded, and then a current reflectivity value is encoded. Specific manners of zero-run encoding and transform coefficient encoding are respectively described below.

### a. Zero-run encoding

First, whether a reflectivity is 0 is determined, and if the reflectivity is 0, length is ++; or if the reflectivity is not 0, a run value is encoded, and then the reflectivity value is encoded. A specific process of encoding the run value length is as follows.
(1) Using a probabilistic model 1: determining whether the length value is 0, and if the length value is 0, encoding a bit 0, and ending current encoding; or if the length value is not 0, encoding a bit 1, and continuing to perform the following determining;
(2) using a probabilistic model 2: determining whether the length value is 1, and if the length value is 1, encoding a bit 0, and ending current encoding; or if the length value is not 1, encoding a bit 1, and continuing to perform the following determining;
(3) using a probabilistic model 3: determining whether the length value is 2, and if the length value is 2, encoding a bit 0, and ending current encoding; or if the length value is not 2, encoding a bit 1, and continuing to perform the following determining;
(4) updating the length value: length-=3;
(5) dividing the length value by 2, that is, prefix=length/2;
(6) using a probabilistic model 4: performing unary code encoding on the prefix, where a maximum of 4 bits is encoded:
   determining whether a prefix value is 0, and if the prefix value is 0, encoding a bit 0 (the probabilistic model 4 is used), and encoding a remainder of length%2 by using a bypass encoding algorithm; or if the prefix value is not 0, encoding a bit 1, and continuing to perform the following determining;
   determining whether the prefix value is 1, and if the prefix value is 1, encoding a bit 0 (the probabilistic model 4 is used), and encoding the remainder of length%2 by using the bypass encoding algorithm; or if the prefix value is not 1, encoding a bit 1, and continuing to perform the following determining;
   determining whether the prefix value is 2, and if the prefix value is 2, encoding a bit 0 (the probabilistic model 4 is used), and encoding the remainder of length%2 by using the bypass encoding algorithm; or if the prefix value is not 2, encoding a bit 1, and continuing to perform the following determining; and
   determining whether the prefix value is 3, and if the prefix value is 3, encoding a bit 0 (the probabilistic model 4 is used), and encoding the remainder of length%2 by using the bypass encoding algorithm; or if the prefix value is not 3, encoding a bit 1, and ending current encoding;
(7) updating the length value: length-=8; and
(8) using a probabilistic model 5: encoding the length value by using a second-order exponential Golomb.

### b. Transform coefficient encoding

When any transform coefficient is encoded, 8 contexts need to be used at most for encoding, and a specific encoding method is as follows:
(1) Using a context 1: encoding whether a current transform coefficient value is greater than 0, and if the current transform coefficient value is 0, ending current encoding; or if the current transform coefficient value is not 0, continuing to perform the following encoding;
(2) using a context 2: encoding whether a current transform coefficient value is greater than 1, and if the current transform coefficient value is 1, ending current encoding; or if the current transform coefficient value is not 1, continuing to perform the following encoding;
(3) using a context 3, 4, and 5, and a context 6, 7, and 8: encoding a value-2 by using a first-order exponential Golomb encoding algorithm, using the context 3, 4, and 5 as a context of a prefix code, and using the context 6, 7, and 8 as a context of a suffix code; and
(4) encoding a sign bit of a transform coefficient value based on a bypass encoding manner.

A point cloud encoding processing method, a point cloud decoding processing method, and a related device provided in embodiments of this application are described in detail below by using some embodiments and application scenarios thereof with reference to the accompanying drawings.

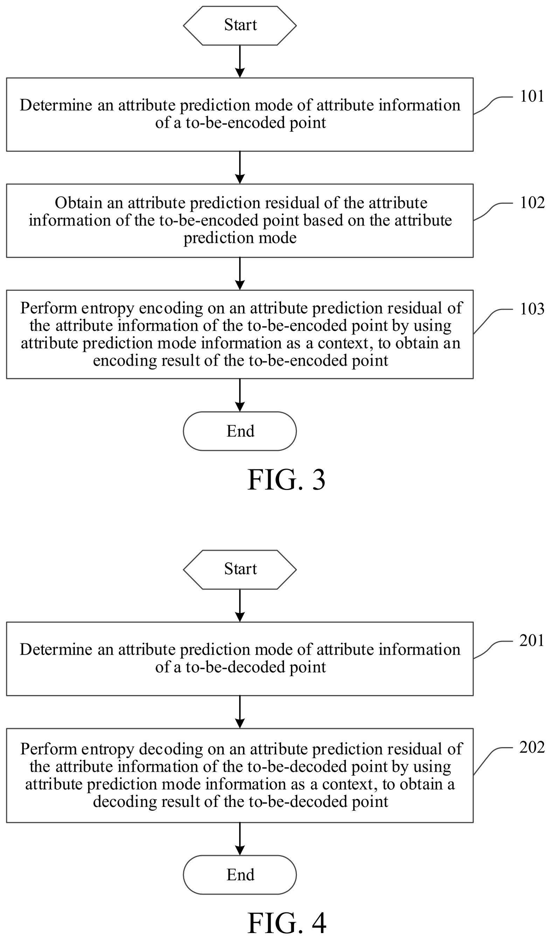

FIG. 3 is a flowchart of a point cloud encoding processing method according to an embodiment of this application. The method may be applied to an encoder side. As shown in FIG. 3, the point cloud encoding processing method includes the following steps.

Step 101: Determine an attribute prediction mode of attribute information of a to-be-encoded point.

The attribute prediction mode of the attribute information of the to-be-encoded point may be at least one of a plurality of prediction modes, or the attribute prediction mode of the attribute information of the to-be-encoded point may include at least one of a first-type prediction mode and a second-type prediction mode.

In addition, the attribute prediction mode of the attribute information of the to-be-encoded point may be determined based on a maximum attribute interpolation corresponding to the to-be-encoded point. The determining an attribute prediction mode of attribute information of a to-be-encoded point may include: when the maximum attribute interpolation corresponding to the to-be-encoded point is less than a preset value, determining the attribute prediction mode of the attribute information of the to-be-encoded point as the first-type prediction mode; when the maximum attribute interpolation corresponding to the to-be-encoded point is greater than or equal to a preset value, determining the attribute prediction mode of the attribute information of the to-be-encoded point as the second-type prediction mode. Alternatively, the determining an attribute prediction mode of attribute information of a to-be-encoded point may include: selecting the attribute prediction mode of the attribute information of the to-be-encoded point from k prediction modes based on a rate-distortion optimization algorithm. Alternatively, the determining an attribute prediction mode of attribute information of a to-be-encoded point may include: when the maximum attribute interpolation corresponding to the to-be-encoded point is greater than or equal to a preset value, selecting the attribute prediction mode of the attribute information of the to-be-encoded point from k prediction modes based on a rate-distortion optimization algorithm. Alternatively, another manner may be used. This is not limited in this embodiment.

Step 102: Obtain an attribute prediction residual of the attribute information of the to-be-encoded point based on the attribute prediction mode.

Herein, the attribute prediction residual may alternatively be described as a transform coefficient, or a transform coefficient residual, or a prediction residual. The attribute prediction residual may be a difference between an attribute predicted value of the to-be-encoded point and the attribute information of the to-be-encoded point. Prediction processing may be performed on the to-be-encoded point based on the attribute prediction mode, to obtain the attribute predicted value of the to-be-encoded point, and an attribute prediction residual of the attribute information of the to-be-encoded point is obtained based on the attribute predicted value of the to-be-encoded point.

In an implementation, when the attribute prediction mode of the attribute information of the to-be-encoded point is the first-type prediction mode, weighted averaging may be performed on an attribute interpolation corresponding to the to-be-encoded point, to obtain the attribute predicted value, and obtain the attribute prediction residual of the attribute information of the to-be-encoded point based on the attribute predicted value of the to-be-encoded point. When the attribute prediction mode of the attribute information of the to-be-encoded point is the second-type prediction mode, at least one prediction mode may be selected from the k prediction modes, to perform prediction processing on the to-be-encoded point, to obtain the attribute predicted value, and obtain the attribute prediction residual of the attribute information of the to-be-encoded point based on the attribute predicted value of the to-be-encoded point. In addition, the attribute interpolation corresponding to the to-be-encoded point may be an attribute interpolation obtained by performing linear interpolation prediction on a reconstructed attribute value of a point in a prediction point set of the to-be-encoded point.

In an implementation, at least one prediction mode may be selected from the k prediction modes, to perform prediction processing on the to-be-encoded point, to obtain the attribute predicted value, and obtain the attribute prediction residual of the attribute information of the to-be-encoded point based on the attribute predicted value of the to-be-encoded point.

It should be noted that the selecting at least one prediction mode from the k prediction modes to perform prediction processing on the to-be-encoded point may include: selecting at least one prediction mode from the k prediction modes based on a rate-distortion optimization algorithm to perform prediction processing on the to-be-encoded point.

For example, a value of k may be 4, and the k prediction modes may include a first prediction mode, a second prediction mode, a third prediction mode, and a fourth prediction mode. In the first prediction mode, weighted averaging is performed on three prediction points selected from the prediction point set of the to-be-encoded point, to obtain the attribute predicted value, and obtain the attribute prediction residual of the attribute information of the to-be-encoded point based on the attribute predicted value, where the selected three prediction points may be a first nearest point, a second nearest point, and a third nearest point. In the second prediction mode, prediction is performed by using the first nearest point, to obtain the attribute predicted value, and obtain the attribute prediction residual of the attribute information of the to-be-encoded point based on the attribute predicted value. In the third prediction mode, prediction is performed by using the second nearest point, to obtain the attribute predicted value, and obtain the attribute prediction residual of the attribute information of the to-be-encoded point based on the attribute predicted value. In the fourth prediction mode, prediction is performed by using the third nearest point to obtain the attribute predicted value, and obtain the attribute prediction residual of the attribute information of the to-be-encoded point based on the attribute predicted value. The first nearest point may be a neighboring point nearest to the to-be-encoded point, the second nearest point may be a neighboring point nearest to the to-be-encoded point other than the first nearest point, and the third nearest point may be a neighboring point nearest to the to-be-encoded point other than the first nearest point and the second nearest point.

Step 103: Perform entropy encoding on the attribute prediction residual by using attribute prediction mode information as a context, to obtain an encoding result of the to-be-encoded point, where the attribute prediction mode information indicates the attribute prediction mode.

The performing entropy encoding on the attribute prediction residual by using attribute prediction mode information as a context may include: encoding, by using the attribute prediction mode information as a context of a context-based adaptive binary arithmetic coding (Context-based Adaptive Binary Arithmetic Coding, CABAC) encoding model, the attribute prediction residual based on the CABAC encoding model.

In an implementation, the encoding the attribute prediction residual based on the CABAC encoding model may be: performing zero-run encoding on the attribute prediction residual based on the CABAC encoding model.

In addition, the attribute prediction mode information may include information such as a number, a letter, or a text. An information form of the attribute prediction mode information is not limited in this embodiment. Any information that can indicate an attribute prediction mode may be used as the attribute prediction mode information.

In addition, the performing entropy encoding on the attribute prediction residual by using the attribute prediction mode information as a context may include: encoding a first identifier by using the attribute prediction mode information as a context, to obtain a first encoding result, where the first identifier indicates whether the attribute prediction residual is a first preset value; or encoding a second identifier by using the attribute prediction mode information as a context, to obtain a second encoding result, where the second identifier indicates whether the attribute prediction residual is a second preset value. The performing entropy encoding on the attribute prediction residual by using the attribute prediction mode information as a context may further include: encoding a to-be-encoded value corresponding to the attribute prediction residual, to obtain a third encoding result. The encoding result of the to-be-encoded point may include at least one of the first encoding result, the second encoding result, or the third encoding result. The first preset value may be 0, 1, 2, or the like. The first preset value is not limited in this embodiment. The second preset value may be 0, 1, 2, or the like. The second preset value is not limited in this embodiment.

In an implementation, the performing entropy encoding on the attribute prediction residual by using the attribute prediction mode information as a context may include: encoding the first identifier by using the attribute prediction mode information as the context, to obtain the first encoding result, where the first identifier indicates whether the attribute prediction residual is the first preset value; and when the attribute prediction residual is not the first preset value, encoding the to-be-encoded value corresponding to the attribute prediction residual, to obtain the third encoding result. The encoding result of the to-be-encoded point may include at least one of the first encoding result and the third encoding result. The first preset value may be 0, 1, 2, or the like. The first preset value is not limited in this embodiment.

In a frame of a point cloud G-PCC encoder in the related technology, when a transform coefficient is encoded, a correlation between attribute prediction mode information and the transform coefficient is not used for encoding. Therefore, there is still room for improvement on modeling a context of the transform coefficient.

In this embodiment of this application, the attribute prediction mode of the attribute information of the to-be-encoded point is determined; the attribute prediction residual of the attribute information of the to-be-encoded point is obtained based on the attribute prediction mode; and entropy encoding is performed on the attribute prediction residual by using attribute prediction mode information as a context, to obtain an encoding result of the to-be-encoded point, where the attribute prediction mode information indicates the attribute prediction mode. In this way, because the attribute prediction residual is obtained by using the attribute prediction mode, there is a correlation between the attribute prediction residual and the attribute prediction mode. When entropy encoding is performed on the attribute prediction residual, the attribute prediction mode information is used as the context. Entropy encoding is performed on the attribute prediction residual by using the correlation between the attribute prediction mode information and the attribute prediction residual, so that encoding efficiency is improved.

Optionally, the performing entropy encoding on the attribute prediction residual by using attribute prediction mode information as a context includes:
encoding the first identifier by using the attribute prediction mode information as the context, to obtain the first encoding result, where the first identifier indicates whether a to-be-encoded value corresponding to the attribute prediction residual is 0; and
when the to-be-encoded value corresponding to the attribute prediction residual is not 0, encoding the second identifier by using the attribute prediction mode information as the context, to obtain the second encoding result, where the second identifier indicates whether the to-be-encoded value corresponding to the attribute prediction residual is 1; or
when the to-be-encoded value corresponding to the attribute prediction residual is neither 0 nor 1, encoding the to-be-encoded value corresponding to the attribute prediction residual, to obtain the third encoding result, where
the encoding result of the to-be-encoded point includes at least one of the first encoding result, the second encoding result, or the third encoding result.

The to-be-encoded value corresponding to the attribute prediction residual may be the attribute prediction residual. Alternatively, the to-be-encoded value corresponding to the attribute prediction residual may be a difference between the attribute prediction residual and a third preset value. For example, the third preset value may be 1.

In an implementation, the first identifier may be a flag bit, and when the to-be-encoded value corresponding to the attribute prediction residual is 0, the first identifier is 1; or when the to-be-encoded value corresponding to the attribute prediction residual is not 0, the first identifier is 0.

In an implementation, the second identifier may be a flag bit, and when the to-be-encoded value corresponding to the attribute prediction residual is 1, the second identifier is 1; or when the to-be-encoded value corresponding to the attribute prediction residual is not 1, the second identifier is 0.

In addition, the encoding the first identifier by using the attribute prediction mode information as the context may include: encoding the first identifier based on a first context or a second context, where the first context is a context for encoding the first identifier in the first-type prediction mode, and the second context is a context for encoding the first identifier in the second-type prediction mode; or may include: encoding the first identifier based on k contexts, where the k contexts respectively indicate k prediction modes.

In addition, the encoding the second identifier by using the attribute prediction mode information as the context may include: encoding the second identifier based on a third context or a fourth context, where the third context is a context for encoding the second identifier in the first-type prediction mode, and the fourth context is a context for encoding the second identifier in the second-type prediction mode; or may include: encoding the second identifier based on the k contexts, where the k contexts respectively indicate the k prediction modes.

In this implementation, when the first identifier indicating whether the to-be-encoded value corresponding to the attribute prediction residual is 0 is encoded, and the second identifier indicating whether the to-be-encoded value corresponding to the attribute prediction residual is 1 is encoded, the attribute prediction mode information is used as the context for encoding. Because the attribute prediction residual is obtained by using the attribute prediction mode, there is a correlation between the attribute prediction residual and the attribute prediction mode, so that there is a correlation between values of the first identifier and the second identifier and the attribute prediction mode. When the first identifier and the second identifier are encoded, the attribute prediction mode information is used as the context. The first identifier and the second identifier are encoded by using the correlation between the first identifier and the second identifier and the attribute prediction mode information, so that encoding efficiency is improved.

Optionally, before the encoding the first identifier by using the attribute prediction mode information as the context, the method further includes:
when the attribute prediction residual is 0, updating a target parameter, where an updated target parameter is the target parameter before the update plus 1; and
the encoding the first identifier by using the attribute prediction mode information as the context includes:
   when the attribute prediction residual is not 0, encoding the target parameter and encoding the first identifier by using the attribute prediction mode information as the context, where
   the target parameter indicates a continuous statistic of a to-be-encoded point whose attribute prediction residual is zero.

The to-be-encoded value corresponding to the attribute prediction residual may be a difference between the attribute prediction residual and the third preset value.

In addition, the target parameter may be a run value of zero-run encoding. Attribute prediction residuals of to-be-encoded points may be traversed, and a quantity of to-be-encoded points whose continuous attribute prediction residuals are 0 is counted and used as the target parameter. When the attribute prediction residual of the to-be-encoded point is 0, the target parameter is updated, and 1 is added to the target parameter.

In this implementation, when the attribute prediction residual is 0, the target parameter is updated, where an updated target parameter is the target parameter before the update plus 1; or when the attribute prediction residual is not 0, encoding the target parameter, and encoding the first identifier by using the attribute prediction mode information as the context, where the target parameter indicates a continuous statistic of a to-be-encoded point whose attribute prediction residual is zero. In this way, zero-run encoding can be performed on the attribute prediction residual by using the attribute prediction mode information as the context, so that encoding efficiency of the zero-run encoding can be improved.

Optionally, the attribute prediction mode includes the first-type prediction mode or the second-type prediction mode, and the encoding the first identifier by using the attribute prediction mode information as the context includes:
encoding the first identifier based on the first context or the second context, where the first context is the context for encoding the first identifier in the first-type prediction mode, and the second context is the context for encoding the first identifier in the second-type prediction mode;
   or
the encoding the second identifier by using the attribute prediction mode information as the context includes:
   encoding the second identifier based on the third context or the fourth context, where the third context is the context for encoding the second identifier in the first-type prediction mode, and the fourth context is the context for encoding the second identifier in the second-type prediction mode.

In this implementation, the first identifier is encoded based on the first context or the second context, where the first context is the context for encoding the first identifier in the first-type prediction mode, and the second context is the context for encoding the first identifier in the second-type prediction mode, so that the first identifier can be encoded by using different types of prediction mode information as a context. The first identifier is encoded by using a correlation between a prediction type and the first identifier, so that encoding efficiency is improved. Alternatively, the second identifier is encoded based on the third context or the fourth context, where the third context is the context for encoding the second identifier in the first-type prediction mode, and the fourth context is the context for encoding the second identifier in the second-type prediction mode, so that the second identifier can be encoded by using different types of prediction mode information as a context. The second identifier is encoded by using a correlation between the prediction type and the second identifier, so that encoding efficiency is improved.

Optionally, the determining an attribute prediction mode of attribute information of a to-be-encoded point includes:
when a maximum attribute interpolation corresponding to the to-be-encoded point is less than a preset value, determining the attribute prediction mode of the attribute information of the to-be-encoded point as the first-type prediction mode; or
when a maximum attribute interpolation value corresponding to the to-be-encoded point is greater than or equal to a preset value, determining the attribute prediction mode of the attribute information of the to-be-encoded point as the second-type prediction mode.

The maximum attribute interpolation corresponding to the to-be-encoded point may be a maximum value of an attribute interpolation corresponding to the to-be-encoded point. The attribute interpolation corresponding to the to-be-encoded point may be an attribute interpolation obtained by performing linear interpolation prediction on a reconstructed attribute value of a point in a prediction point set of the to-be-encoded point. The maximum attribute interpolation corresponding to the to-be-encoded point may indicate a maximum change between neighbors. The maximum attribute interpolation value corresponding to the to-be-encoded point being less than the preset value may be considered as that any two attribute interpolation values in attribute interpolation values corresponding to the to-be-encoded point are less than the preset value.

In this implementation, when the maximum attribute interpolation corresponding to the to-be-encoded point is less than the preset value, it is determined that the attribute prediction mode of the attribute information of the to-be-encoded point is the first-type prediction mode; or when the maximum attribute interpolation corresponding to the to-be-encoded point is greater than or equal to the preset value, it is determined that the attribute prediction mode of attribute information of the to-be-encoded point is the second-type prediction mode. In this way, the attribute prediction mode of the attribute information of the to-be-encoded point can be determined, and further, the attribute prediction residual of the attribute information of the to-be-encoded point is obtained by using the determined attribute prediction mode.

Optionally, the attribute prediction mode includes the k prediction modes, k is a positive integer, and the encoding the first identifier by using the attribute prediction mode information as the context includes:
encoding the first identifier based on the k contexts;
   or
the encoding the second identifier by using the attribute prediction mode information as the context includes:
   encoding the second identifier based on the k contexts, where
   the k contexts respectively indicate the k prediction modes.

For example, k is 4. The encoding the first identifier based on the k contexts may be encoding the first identifier based on a context 1, a context 2, a context 3, and a context 4. The context 1, the context 2, the context 3, and the context 4 may respectively indicate four prediction modes. The encoding the second identifier based on the k contexts may be encoding the second identifier based on a context 5, a context 6, a context 7, and a context 8. The context 5, the context 6, the context 7, and the context 8 may respectively indicate four prediction modes. The four prediction modes may be the first prediction mode, the second prediction mode, the third prediction mode, and the fourth prediction mode.

In this implementation, the first identifier is encoded based on the k contexts; and the second identifier is encoded based on the k contexts, where the k contexts respectively indicate k prediction modes. Therefore, the first identifier and the second identifier can be encoded by using k contexts in a one-to-one correspondence with the k prediction modes, thereby improving encoding efficiency.

Optionally, the determining an attribute prediction mode of attribute information of a to-be-encoded point includes:
when the maximum attribute interpolation corresponding to the to-be-encoded point is greater than or equal to the preset value, selecting the attribute prediction mode of the attribute information of the to-be-encoded point from the k prediction modes based on a rate-distortion optimization algorithm.

The maximum attribute interpolation corresponding to the to-be-encoded point may be a maximum value of an attribute interpolation corresponding to the to-be-encoded point. The attribute interpolation corresponding to the to-be-encoded point may be an attribute interpolation obtained by performing linear interpolation prediction on a reconstructed attribute value of a point in a prediction point set of the to-be-encoded point.

In this implementation, when the maximum attribute interpolation value corresponding to the to-be-encoded point is greater than or equal to the preset value, the attribute prediction mode of the attribute information of the to-be-encoded point is selected from the k prediction modes based on the rate-distortion optimization algorithm, to determine the attribute prediction mode of the attribute information of the to-be-encoded point, and further obtain the attribute prediction residual of the attribute information of the to-be-encoded point by using the determined attribute prediction mode.

FIG. 4 is a flowchart of a point cloud decoding processing method according to an embodiment of this application. The method may be applied to a decoder side. As shown in FIG. 4, the point cloud decoding processing method includes the following steps.

Step 201: Determine an attribute prediction mode of attribute information of a to-be-decoded point.

Step 202: Perform entropy decoding on an attribute prediction residual of the attribute information of the to-be-decoded point by using attribute prediction mode information as a context, to obtain a decoding result of the to-be-decoded point, where the attribute prediction mode information indicates the attribute prediction mode.

Optionally, the performing entropy decoding on an attribute prediction residual of the attribute information of the to-be-decoded point by using attribute prediction mode information as a context includes:
decoding a first identifier by using the attribute prediction mode information as a context, where the first identifier indicates whether a to-be-decoded value corresponding to the attribute prediction residual of the attribute information of the to-be-decoded point is 0; and
when the first identifier indicates that the to-be-decoded value corresponding to the attribute prediction residual is not 0, decoding a second identifier by using the attribute prediction mode information as a context, where the second identifier indicates whether the to-be-decoded value corresponding to the attribute prediction residual is 1; or
when the second identifier indicates that the to-be-decoded value corresponding to the attribute prediction residual is not 1, decoding the to-be-decoded value corresponding to the attribute prediction residual.

Optionally, before the decoding a first identifier by using the attribute prediction mode information as a context, the method further includes:
decoding a target parameter, where the target parameter indicates a continuous statistic of a to-be-decoded point whose attribute prediction residual is zero; and
the decoding a first identifier by using the attribute prediction mode information as a context includes:
   decoding the first identifier by using the attribute prediction mode information as the context when the target parameter is 0.

Optionally, the attribute prediction mode includes a first-type prediction mode or a second-type prediction mode, and the decoding a first identifier by using the attribute prediction mode information as a context includes:
decoding the first identifier based on a first context or a second context, where the first context is a context for decoding the first identifier in the first-type prediction mode, and the second context is a context for decoding the first identifier in the second-type prediction mode;
   or
the decoding a second identifier by using the attribute prediction mode information as a context includes:
   decoding the second identifier based on a third context or a fourth context, where the third context is a context for decoding the second identifier in the first-type prediction mode, and the fourth context is a context for decoding the second identifier in the second-type prediction mode.

Optionally, the determining an attribute prediction mode of attribute information of a to-be-decoded point includes:
when a maximum attribute interpolation corresponding to the to-be-decoded point is less than a preset value, determining the attribute prediction mode of the attribute information of the to-be-decoded point as the first-type prediction mode; or
when a maximum attribute interpolation value corresponding to the to-be-decoded point is greater than or equal to a preset value, determining the attribute prediction mode of the attribute information of the to-be-decoded point as the second-type prediction mode.

Optionally, the attribute prediction mode includes k prediction modes, k is a positive integer, and the decoding a first identifier by using the attribute prediction mode information as a context includes:
decoding the first identifier based on k contexts;
   or
the decoding a second identifier by using the attribute prediction mode information as a context includes:
   decoding the second identifier based on the k contexts, where
   the k contexts respectively indicate the k prediction modes.

Optionally, the determining an attribute prediction mode of attribute information of a to-be-decoded point includes:
when the maximum attribute interpolation corresponding to the to-be-decoded point is greater than or equal to the preset value, selecting the attribute prediction mode of the attribute information of the to-be-decoded point from the k prediction modes based on a rate-distortion optimization algorithm.

It should be noted that this embodiment is used as an implementation on a decoder side corresponding to the embodiment shown in FIG. 3. For a specific implementation, refer to related descriptions of the embodiment shown in FIG. 3. To avoid repeated descriptions, details are not described in this embodiment again, and a same beneficial effect can be achieved.

The point cloud encoding processing method and the point cloud decoding processing method in embodiments of this application are described below by using two specific embodiments.

### Embodiment 1

### Encoder side:

### Step (11): Divide a point cloud.

Layer division is performed on a to-be-encoded point cloud through level of detail (LoD), to establish a hierarchical structure of the point cloud.

### Step (12): Construct a prediction point set.

First, a point at a bottom layer in the hierarchical structure is encoded. Points at the bottom layer and the same layer are used as reference points. A to-be-encoded point is searched for in the reference points. K nearest reference points are selected as prediction reference points. Linear interpolation prediction is performed by using reconstructed attribute values of the K nearest neighbors. A weight of linear interpolation is a reciprocal of a Euclidean distance between a nearest neighboring point and the to-be-encoded point. An optimal prediction mode is selected by using a rate-distortion optimization algorithm. A specific process is as follows:

First, it is determined whether a maximum attribute interpolation corresponding to a to-be-encoded point is greater than a preset value:
If the maximum attribute interpolation value corresponding to the to-be-encoded point is less than the preset value, a mode singlepredmode (that is, a first-type prediction mode) is used to perform weighted averaging on the points in the prediction point set to obtain the attribute predicted value.

If the maximum attribute interpolation corresponding to the to-be-encoded point is greater than or equal to the preset value, a mode mutipredmode (that is, a second-type prediction mode) is used, and one of the following four modes is selected by using RDO:
Predmode0 (namely, a first prediction mode): performing weighted averaging on found three prediction points;
Predmode 1 (namely, a second prediction mode): performing prediction by using a first neighbor;
Predmode 2 (namely, a third prediction mode): Performing prediction by using a second neighbor; and
Predmode 3 (namely, a fourth prediction mode): performing prediction by using a third neighbor.

For singlepredmode, there is only one prediction mode, namely, weight average, and therefore, predmodidex is 0 by default, and no encoding is needed.

For mutipredmode, there are four prediction modes, and therefore, predmodidex needs to be encoded. Currently, the G-PCC does not encode predmodidex separately, but combines predmodidex with a transform coefficient according to a fixed rule, and finally encodes only the combined transform coefficient.

### Step (13): Differential prediction.

Differential prediction is performed on a prediction point and a current point (namely, the to-be-encoded point), to obtain a prediction residual (also referred to as a transform coefficient or a transform coefficient residual) of the current point.

Step (14): Perform entropy encoding on the prediction residual (namely, an attribute prediction residual).

All prediction residuals are traversed. First, whether a current prediction residual is 0 is determined; and if the current prediction residual is 0, 1 is added to a run value length (namely, the target parameter); or if the current prediction residual is not 0, a current length value is encoded, and then the current prediction residual is encoded. A process of encoding the current prediction residual is as follows.

The prediction residual is encoded by using attribute prediction mode information as a context. The following entropy encoding algorithm is designed to perform entropy encoding on the prediction residual. A specific process is as follows.

An attribute prediction mode of the current to-be-encoded point is determined as singlepredmode or mutipredmode, and the prediction residual is encoded by using this information as two contexts.
(1) Encoding by using a context 1 and a context 2 (indicating a mode singlepredmode or a mode mutipredmode): encoding whether a current prediction residual value is greater than 0, and if the current prediction residual value is greater than 0, ending current encoding; or if the current prediction residual value is not 0, continuing to perform the following encoding;
(2) encoding by using a context 3 and a context 4 (indicating a mode singlepredmode or a mode mutipredmode): encoding whether a current prediction residual value is greater than 1, and if the current prediction residual value is greater than 1, ending current encoding; or if the current prediction residual value is not 1, continuing to perform the following encoding;
(3) encoding by using a context 5, a context 6, and a context 7, and a context 8, a context 9, and a context 10: encoding a value of value-2 based on a first-order exponential Golomb encoding algorithm, using the context 5, the context 6, the context 7 as a context of a prefix code, and using the context 8, the context 9, and the context 10 as a context of a suffix code in an encoding process; and
(4) encoding a sign bit of a prediction residual value by using a bypass encoding algorithm.

### Decoder side:

### Step (21): Divide a point cloud.

Layer division is performed on a to-be-decoded point cloud through level of detail (LoD), to establish a hierarchical structure of the point cloud.

### Step (22): Construct a prediction point set.

First, a point at a bottom level in the hierarchical structure is decoded, and the point at the bottom level and a point at the same level are used as reference points. A to-be-decoded point is searched for in the reference points, and nearest K reference points are selected as prediction reference points. Linear interpolation prediction is performed by using reconstructed attribute values of the K nearest neighbors, where a weight of linear interpolation is a reciprocal of a Euclidean distance between a nearest neighboring point and the to-be-decoded point. An optimal prediction mode is selected by using a rate-distortion optimization algorithm. A specific process is as follows.

First, whether a maximum attribute interpolation corresponding to the to-be-decoded point is greater than a preset value is determined.

If the maximum attribute interpolation corresponding to the to-be-decoded point is less than the preset value, weighted averaging is performed on points in the prediction point set by using a mode singlepredmode to obtain an attribute predicted value; or
if the maximum attribute interpolation corresponding to the to-be-decoded point is greater than or equal to the preset value, a mode mutipredmode is used, and one of the following four modes is selected through RDO:
Predmode0: performing weighted averaging on found three prediction points;
Predmode1: performing prediction by using a first neighbor;
Predmode2: performing prediction by using a second neighbor; and
Predmode3: performing prediction by using a third neighbor.

Step (23): Perform entropy decoding on a prediction residual.

Prediction residuals are successively decoded. First, a run value length of a current prediction residual is decoded, and if the run value length is not 0, a current prediction residual is 0; or if the run value length is 0, a current prediction residual is decoded, and a process of decoding the prediction residual is as follows.

An attribute prediction mode of the current to-be-decoded point is determined as singlepredmode or mutipredmode, and the prediction residual is decoded by using this information as two contexts.
(1) Decoding by using a context 1 and a context 2 (indicating a mode singlepredmode or a mode mutipredmode): decoding whether a current prediction residual value is greater than 0, and if the current prediction residual value is greater than 0, ending current decoding; or if the current prediction residual value is not 0, continuing to perform the following decoding;
(2) decoding by using a context 3 and a context 4 (indicating a mode singlepredmode or a mode mutipredmode): decoding whether a current prediction residual value is greater than 1, and if the current prediction residual value is greater than 1, ending current decoding; or if the current prediction residual value is not 1, continuing to perform the following decoding;
(3) decoding by using a context 5, a context 6, and a context 7, and a context 8, a context 9, and a context 10: decoding a value of value-2 based on a first-order exponential Golomb decoding algorithm, using the context 5, the context 6, the context 7 as a context of a prefix code, and using the context 8, the context 9, and the context 10 as a context of a suffix code in a decoding process; and
(4) decoding a sign bit of a prediction residual value by using a bypass decoding algorithm.

Step (24): Traverse prediction residuals of each point; and if a current point corresponds to the mode mutipredmode, a real prediction residual needs to be separated from the prediction residual according to a fixed rule, and then the prediction residual is differentiated with a corresponding prediction point point by point, to reconstruct attribute information of each point, thereby completing decoding and reconstruction of attribute information of an entire point cloud.

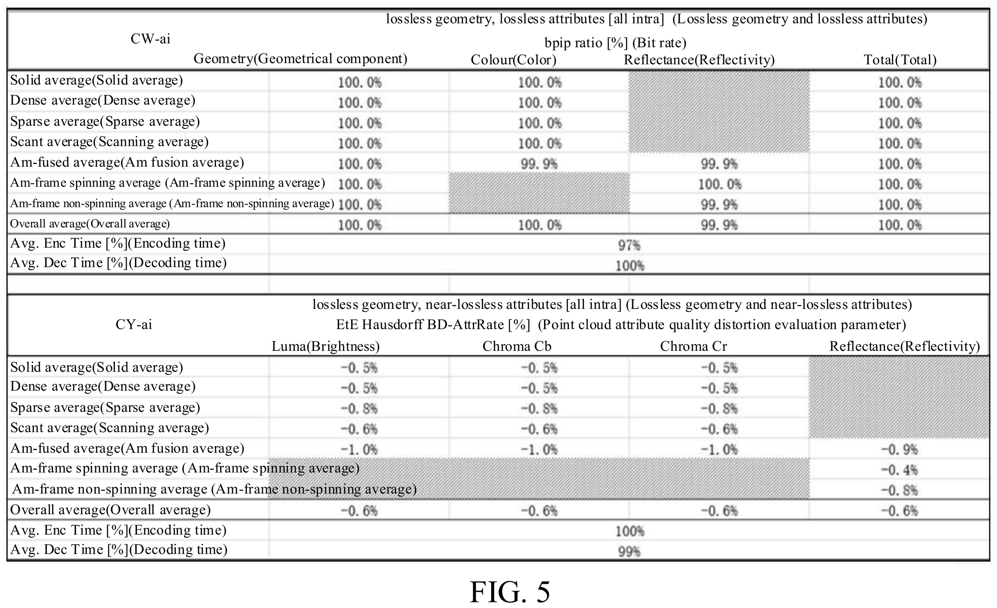

As shown in FIG. 5, encoding and decoding are performed by using the point cloud encoding processing method and the point cloud decoding processing method in embodiments of this application, so that a code rate can be lowered and encoding efficiency can be improved. In FIG. 5, a first vertical column includes indicating a plurality of types of point clouds graded according to point cloud density, for example, a solid average (Solid average), a dense average (Dense average), and a sparse average (Sparse average). An Overall average represents an average value of the foregoing plurality of types of point clouds. Avg. Enc Time indicates an encoding time, and Avg. Dec Time indicates a decoding time. Geometry is a geometrical component. A color (Colour) and a reflectivity (reflectivity) are attribute components. CW_ai and CY_ai are test conditions for point cloud encoding, where CW_ai represents a condition of lossless geometry and lossless attributes (Lossless geometry, Lossless attributes[all intra]); and C2_ai represents a condition of lossless geometry and near-lossless attributes (Lossless geometry, near-Lossless attributes [all intra]). Bpip ratio represents a bit rate. If the Bpip ratio parameter is less than 100%, it represents that a bit rate control effect of encoding the point cloud by using this embodiment is better than a bit rate control effect of encoding by using the existing technology. EtE Hausdorff BD-AttrRate represents a point cloud attribute quality distortion evaluation parameter. If the EtE Hausdorff BD-AttrRate parameter is a negative value, it represents that comprehensive quality of a point cloud encoded by using this embodiment is higher than comprehensive quality of a point cloud encoded by using the existing technology. It can be learned from FIG. 5 that, comprehensive quality of the point cloud encoded by using this embodiment is higher than comprehensive quality of the point cloud encoded by using the existing technology.

In one aspect, in embodiments of this application, an attribute prediction residual is encoded by using a correlation between attribute prediction mode information and the attribute prediction residual. In addition, the attribute prediction residual is encoded by using the attribute prediction mode information as a context, so that a code rate can be lowered, and encoding efficiency can be improved.

### Embodiment 2

### Encoder side:

A prediction residual is encoded by using attribute prediction mode information as a context. The following entropy encoding algorithm is designed to perform entropy encoding on the prediction residual. A specific process is as follows.

An attribute prediction mode of a current to-be-encoded point is determined, where the attribute prediction mode is one of the following four modes:
Predmode0: performing weighted averaging on found three prediction points;
Predmode1: performing prediction by using a first neighbor;
Predmode2: performing prediction by using a second neighbor; and
Predmode3: performing prediction by using a third neighbor.

The prediction residual is encoded by using attribute prediction mode information as 4 contexts.
(1) Performing encoding by using a context 1, a context 2, a context 3, and a context 4 (indicating a mode Predmode0, a mode Predmode 1, a mode Predmode 2, or a mode Predmode 3): encoding whether a current prediction residual value is greater than 0, and if the current prediction residual value is 0, ending current encoding; or if the current prediction residual value is not 0, continuing to perform the following encoding;
(2) performing encoding by using a context 5, a context 6, a context 7, and a context 8 (indicating the mode Predmode0, the mode Predmode 1, the mode Predmode 2, or the mode Predmode 3): encoding whether a current prediction residual value is greater than 1, and if the current prediction residual value is 1, ending current encoding; or if the current prediction residual value is not 1, continuing to perform the following encoding;
(3) performing encoding by using a context 9, a context 10, a context 11, a context 12, a context 13, and a context 14: encoding a value of value-2 based on a first-order exponential Golomb encoding algorithm, using the context 9, the context 10, the context 11 as a context of a prefix code, and using the context 12, the context 13, and the context 14 as a context of a suffix code; and
(4) encoding a sign bit of a prediction residual value by using a bypass encoding algorithm.

### Decoder side:

A process of decoding a prediction residual by using attribute prediction mode information as a context and performing entropy decoding on the prediction residual is as follows.

An attribute prediction mode of a current to-be-decoded point is determined, where the attribute prediction mode is one of the following four modes:
Predmode0: performing weighted averaging on found three prediction points;
Predmode1: performing prediction by using a first neighbor;
Predmode2: performing prediction by using a second neighbor; and
Predmode3: performing prediction by using a third neighbor.

The prediction residual is decoded by using attribute prediction mode information as 4 contexts.
(1) Performing decoding by using a context 1, a context 2, a context 3, and a context 4 (indicating a mode Predmode0, a mode Predmode 1, a mode Predmode 2, or a mode Predmode 3): decoding whether a current prediction residual value is greater than 0, and if the current prediction residual value is 0, ending current decoding; or if the current prediction residual value is not 0, continuing to perform the following decoding;
(2) performing decoding by using a context 5, a context 6, a context 7, and a context 8 (indicating the mode Predmode0, the mode Predmode 1, the mode Predmode 2, or the mode Predmode 3): decoding whether a current prediction residual value is greater than 1, and if the current prediction residual value is 1, ending current decoding; or if the current prediction residual value is not 1, continuing to perform the following decoding;
(3) performing decoding by using a context 9, a context 10, a context 11, a context 12, a context 13, and a context 14: decoding a value of value-2 by using a first-order exponential Golomb decoding algorithm, using the context 9, the context 10, the context 11 as a context of a prefix code, and using the context 12, the context 13, and the context 14 as a context of a suffix code; and
(4) decoding a sign bit of a prediction residual value by using bypass decoding.

It should be noted that, an execution body of the point cloud encoding processing method provided in embodiments of this application may be a point cloud encoding processing apparatus or a control module in the point cloud encoding processing apparatus that is configured to perform the point cloud encoding processing method. In embodiments of this application, a point cloud encoding processing apparatus provided by embodiments of this application is described with the point cloud encoding processing apparatus executing the point cloud encoding processing method as an example.

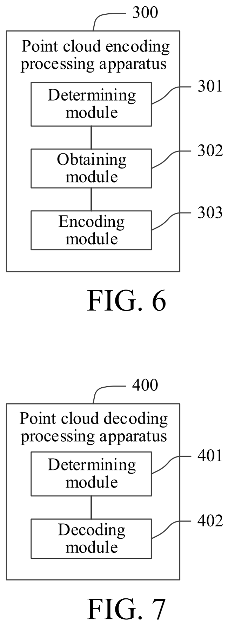

FIG. 6 is a diagram of a structure of a point cloud encoding processing apparatus according to an embodiment of this application. As shown in FIG. 6, the point cloud encoding processing apparatus 300 includes:
a determining module 301, configured to determine an attribute prediction mode of attribute information of a to-be-encoded point;
an obtaining module 302, configured to obtain an attribute prediction residual of the attribute information of the to-be-encoded point based on the attribute prediction mode; and
an encoding module 303, configured to perform entropy encoding on the attribute prediction residual by using attribute prediction mode information as a context, to obtain an encoding result of the to-be-encoded point, where the attribute prediction mode information indicates the attribute prediction mode.

Optionally, the encoding module includes:
a first encoding unit, configured to encode a first identifier by using the attribute prediction mode information as a context, to obtain a first encoding result, where the first identifier indicates whether a to-be-encoded value corresponding to the attribute prediction residual is 0;
a second encoding unit, configured to: when the to-be-encoded value corresponding to the attribute prediction residual is not 0, encode a second identifier by using the attribute prediction mode information as a context, to obtain a second encoding result, where the second identifier indicates whether the to-be-encoded value corresponding to the attribute prediction residual is 1; and
a third encoding unit, configured to: when the to-be-encoded value corresponding to the attribute prediction residual is neither 0 nor 1, encode the to-be-encoded value corresponding to the attribute prediction residual, to obtain a third encoding result, where
the encoding result of the to-be-encoded point includes at least one of the first encoding result, the second encoding result, or the third encoding result.

Optionally, the apparatus further includes:
an update module, configured to: when the attribute prediction residual is 0, update the target parameter, where an updated target parameter is the target parameter before the update plus 1; and
the first encoding unit is specifically configured to:
   when the attribute prediction residual is not 0, encode the target parameter and encode the first identifier by using the attribute prediction mode information as the context, where
   the target parameter indicates a continuous statistic of a to-be-encoded point whose attribute prediction residual is zero.

Optionally, the attribute prediction mode includes a first-type prediction mode or a second-type prediction mode, and the first encoding unit is specifically configured to:
encoding the first identifier based on a first context or a second context, where the first context is a context for encoding the first identifier in the first-type prediction mode, and the second context is a context for encoding the first identifier in the second-type prediction mode;
   or
when the to-be-encoded value corresponding to the attribute prediction residual is not 0, the second encoding unit is specifically configured to:
   encoding the second identifier based on a third context or a fourth context, where the third context is a context for encoding the second identifier in the first-type prediction mode, and the fourth context is a context for encoding the second identifier in the second-type prediction mode.

Optionally, the determining module is specifically configured to:
when a maximum attribute interpolation corresponding to the to-be-encoded point is less than a preset value, determine the attribute prediction mode of the attribute information of the to-be-encoded point as the first-type prediction mode; or
when a maximum attribute interpolation value corresponding to the to-be-encoded point is greater than or equal to a preset value, determine the attribute prediction mode of the attribute information of the to-be-encoded point as the second-type prediction mode.

Optionally, the attribute prediction mode includes k prediction modes, k is a positive integer, and the first encoding unit is specifically configured to:
encode the first identifier based on k contexts;
   or
when the to-be-encoded value corresponding to the attribute prediction residual is not 0, the second encoding unit is specifically configured to:
   encode the second identifier based on the k contexts, where
   the k contexts respectively indicate the k prediction modes.

Optionally, the determining module is specifically configured to:
when the maximum attribute interpolation corresponding to the to-be-encoded point is greater than or equal to the preset value, select the attribute prediction mode of the attribute information of the to-be-encoded point from the k prediction modes based on a rate-distortion optimization algorithm.

The point cloud encoding processing apparatus in this embodiment of this application may be an apparatus, for example, an apparatus with an operating system, or may be a component in a terminal, for example, an integrated circuit or a chip. The apparatus may be an electronic device or a mobile terminal, or may be a non-mobile terminal. For example, the mobile terminal may include, but is not limited to, the types of the terminal listed above, and the non-mobile terminal may be a server, a network attached storage (Network Attached Storage, NAS), a personal computer (personal computer, PC), a television (television, TV), an automated teller machine or a self-service machine, or the like. This is not specifically limited in embodiments of this application.

The point cloud encoding processing apparatus provided in embodiments of this application can implement processes implemented in the method embodiment of FIG. 3, and achieve a same technical effect. To avoid repetition, details are not described herein again.

It should be noted that, an execution body of the point cloud decoding processing method provided in embodiments of this application may be a point cloud decoding processing apparatus or a control module in the point cloud decoding processing apparatus that is configured to perform the point cloud decoding processing method. In embodiments of this application, a point cloud decoding processing apparatus provided by embodiments of this application is described with the point cloud decoding processing apparatus executing the point cloud decoding processing method as an example.

FIG. 7 is a diagram of a structure of a point cloud decoding processing apparatus according to an embodiment of this application. As shown in FIG. 7, the point cloud decoding processing apparatus 400 includes:
a determining module 401, configured to determine an attribute prediction mode of attribute information of a to-be-decoded point; and
a decoding module 402, configured to perform entropy decoding on an attribute prediction residual of the attribute information of the to-be-decoded point by using attribute prediction mode information as a context, to obtain a decoding result of the to-be-decoded point, where the attribute prediction mode information indicates the attribute prediction mode.

Optionally, the decoding module includes:
a first decoding unit, configured to decode a first identifier by using attribute prediction mode information as a context, where the first identifier indicates whether a to-be-decoded value corresponding to the attribute prediction residual of the attribute information of the to-be-decoded point is 0;
a second decoding unit, configured to: when the first identifier indicates that the to-be-decoded value corresponding to the attribute prediction residual is not 0, decode a second identifier by using the attribute prediction mode information as a context, where the second identifier indicates whether the to-be-decoded value corresponding to the attribute prediction residual is 1; and
a third decoding unit, configured to: when the second identifier indicates that the to-be-decoded value corresponding to the attribute prediction residual is not 1, decode the to-be-decoded value corresponding to the attribute prediction residual.

Optionally, the decoding module further includes:
a fourth decoding unit, configured to decode a target parameter, where the target parameter indicates a continuous statistical value of a to-be-decoded point whose attribute prediction residual is zero; and
the first decoding unit is specifically configured to:
   decode the first identifier by using the attribute prediction mode information as the context when the target parameter is 0.

Optionally, the attribute prediction mode includes a first-type prediction mode or a second-type prediction mode, and the first decoding unit is specifically configured to:
decode the first identifier based on a first context or a second context, where the first context is a context for decoding the first identifier in the first-type prediction mode, and the second context is a context for decoding the first identifier in the second-type prediction mode;
   or
when the first identifier indicates that the to-be-decoded value corresponding to the attribute prediction residual is not 0, the second decoding unit is specifically configured to decode the second identifier based on a third context or a fourth context, where the third context is a context for decoding the second identifier in the first-type prediction mode, and the fourth context is a context for decoding the second identifier in the second-type prediction mode.

Optionally, the determining module is specifically configured to:
when a maximum attribute interpolation corresponding to the to-be-decoded point is less than a preset value, determine the attribute prediction mode of the attribute information of the to-be-decoded point as the first-type prediction mode; or
when a maximum attribute interpolation value corresponding to the to-be-decoded point is greater than or equal to a preset value, determine the attribute prediction mode of the attribute information of the to-be-decoded point as the second-type prediction mode.

Optionally, the attribute prediction mode includes k prediction modes, k is a positive integer, and the first decoding unit is specifically configured to:
decode the first identifier based on k contexts;
   or
when the first identifier indicates that the to-be-decoded value corresponding to the attribute prediction residual is not 0, the second decoding unit is specifically configured to:
   decode the second identifier based on the k contexts, where
   the k contexts respectively indicate the k prediction modes.

Optionally, the determining module is specifically configured to:
when the maximum attribute interpolation corresponding to the to-be-decoded point is greater than or equal to the preset value, select the attribute prediction mode of the attribute information of the to-be-decoded point from the k prediction modes based on a rate-distortion optimization algorithm.

The point cloud decoding processing apparatus in this embodiment of this application may be an apparatus, for example, an apparatus with an operating system, or may be a component in a terminal, for example, an integrated circuit or a chip. The apparatus may be an electronic device or a mobile terminal, or may be a non-mobile terminal. For example, the mobile terminal may include, but is not limited to, the types of the terminal listed above, and the non-mobile terminal may be a server, a network attached storage (Network Attached Storage, NAS), a personal computer (personal computer, PC), a television (television, TV), an automated teller machine or a self-service machine, or the like. This is not specifically limited in embodiments of this application.

The point cloud decoding processing apparatus provided in embodiments of this application can implement processes implemented in the method embodiment of FIG. 4, and achieve a same technical effect. To avoid repetition, details are not described herein again.

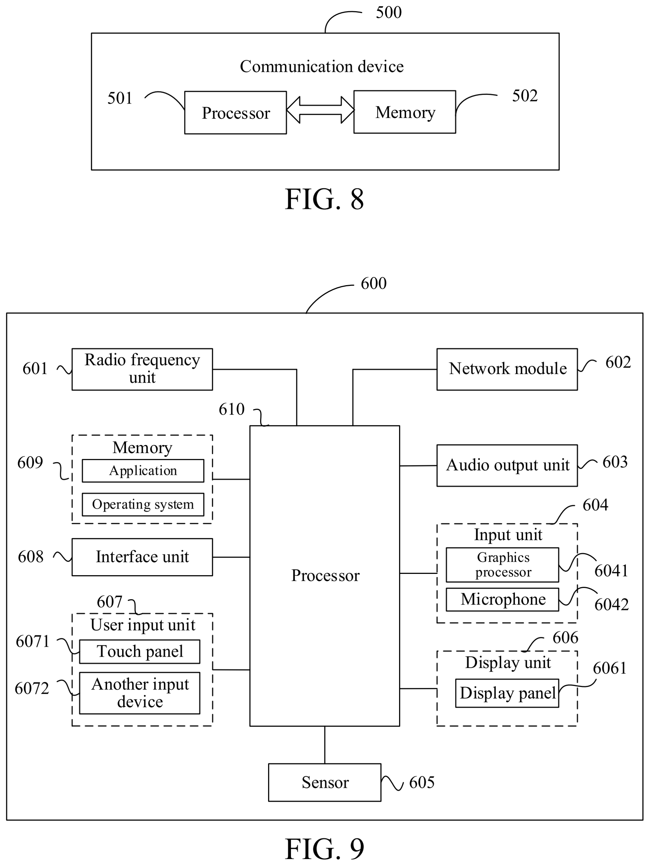

Optionally, as shown in FIG. 8, an embodiment of this application further provides a communication device 500, including a processor 501 and a memory 502. A program or instructions runnable on the processor 501 is stored on the memory 502. For example, when the communication device 500 is an encoder side device, the program or instructions, when executed by the processor 501, implements the various steps of the embodiments of the point cloud encoding processing method, and can achieve a same technical effect. When the communication device 500 is the decoder side device, the steps of the embodiments of the point cloud decoding processing method is implemented when the program or the instructions is/are executed by the processor 501, and a same technical effect may be achieved. To avoid repetition, details are not described herein again.

An embodiment of this application further provides a terminal, including a processor and a communication interface, where the processor is configured to: determine an attribute prediction mode of attribute information of a to-be-encoded point; obtain an attribute prediction residual of the attribute information of the to-be-encoded point based on the attribute prediction mode; and performing entropy encoding on the attribute prediction residual by using attribute prediction mode information as a context, to obtain an encoding result of the to-be-encoded point, where the attribute prediction mode information indicates the attribute prediction mode. Alternatively, the processor is configured to: determine an attribute prediction mode of attribute information of a to-be-decoded point; and perform entropy decoding on an attribute prediction residual of the attribute information of the to-be-decoded point by using attribute prediction mode information as a context, to obtain a decoding result of the to-be-decoded point, where the attribute prediction mode information indicates the attribute prediction mode.

The terminal embodiment corresponds to the foregoing embodiment of the point cloud encoding processing method or the embodiment of the point cloud decoding processing method, and each implementation process and implementation of the foregoing embodiment of the point cloud encoding processing method or the embodiment of the point cloud decoding processing method may be applied to the terminal embodiment, and a same technical effect can be achieved. Specifically, FIG. 9 is a diagram of a hardware structure of a terminal according to an embodiment of this application.

The terminal 600 includes, but is not limited to, at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (for example, a battery) for supplying power to the components. The power supply may be logically connected to the processor 610 by a power management system, thereby implementing functions such as charging, discharging, and power consumption management by using the power management system. The terminal structure shown in FIG. 9 does not constitute a limitation on the terminal, and the terminal may include more or fewer components than those shown in the figure, or combine some components, or have different component arrangements. Details are not described herein again.

It should be understood that, in embodiments of this application, the input unit 604 may include a graphics processing unit (Graphics Processing Unit, GPU) 6041 and a microphone 6042. The graphics processing unit 6041 performs processing on image data of a static picture or a video that is obtained by an image acquisition device (for example, a camera) in a video acquisition mode or an image acquisition mode. The display unit 606 may include a display panel 6061. The display panel 6061 may be configured in the form of a liquid crystal display, an organic light-emitting diode, or the like. The user input unit 607 includes at least one of a touch panel 6071 and another input device 6072. The touch panel 6071 is also known as a touchscreen. The touch panel 6071 may include two parts: a touch detection apparatus and a touch controller. Specifically, the another input device 6072 may include, but not limited to, a physical keyboard, a function key (for example, a volume control key or a switch key), a track ball, a mouse, and a joystick. Details are not described herein again.

In this embodiment of this application, after receiving downlink data from a network side device, the radio frequency unit 601 may transmit the downlink data to the processor 610 for processing. In addition, the radio frequency unit 601 may send uplink data to the network side device. Usually, the radio frequency unit 601 includes, but is not limited to, an antenna, an amplifier, a transceiver, a coupler, a low noise amplifier, a duplexer, and the like.

The memory 609 may be configured to store a software program, instructions, and various data. The memory 609 may mainly include a first storage area that stores a program or instructions, and a second storage area that stores data. The first storage area may store an operating system, an application or instructions required by at least one function (for example, a sound playback function and an image display function), and the like. Besides, the memory 609 may include a volatile memory or a non-volatile memory, or the memory 609 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), or a direct Rambus random access memory (Direct Rambus RAM, DR RAM). The memory 609 in this embodiment of this application includes, but is not limited to, these memories and any other suitable types of memories.

The processor 610 may include one or more processing units. Optionally, the processor 610 integrates an application processor and a modem processor. The application processor mainly processes operations involving an operating system, a user interface, an application, and the like. The modem processor mainly processes a wireless communication signal, and is, for example, a baseband processor. It may be understood that the foregoing modem processor may not be integrated into the processor 610.

Herein, when the terminal is an encoder side,
the processor 610 is configured to:
determine an attribute prediction mode of attribute information of a to-be-encoded point;
obtain an attribute prediction residual of the attribute information of the to-be-encoded point based on the attribute prediction mode; and
perform entropy encoding on the attribute prediction residual by using attribute prediction mode information as a context, to obtain an encoding result of the to-be-encoded point, where the attribute prediction mode information indicates the attribute prediction mode.

Optionally, the processor 610 is specifically configured to:
encode a first identifier by using the attribute prediction mode information as a context, to obtain a first encoding result, where the first identifier indicates whether a to-be-encoded value corresponding to the attribute prediction residual is 0; and
when the to-be-encoded value corresponding to the attribute prediction residual is not 0, encode a second identifier by using the attribute prediction mode information as a context, to obtain a second encoding result, where the second identifier indicates whether the to-be-encoded value corresponding to the attribute prediction residual is 1; or
when the to-be-encoded value corresponding to the attribute prediction residual is neither 0 nor 1, encode the to-be-encoded value corresponding to the attribute prediction residual, to obtain a third encoding result, where
the encoding result of the to-be-encoded point includes at least one of the first encoding result, the second encoding result, or the third encoding result.

Optionally, the processor 610 is further configured to:
when the attribute prediction residual is 0, update a target parameter, where an updated target parameter is the target parameter before the update plus 1; and
the processor 610 is specifically configured to:
   when the attribute prediction residual is not 0, encode the target parameter and encode the first identifier by using the attribute prediction mode information as the context, where
   the target parameter indicates a continuous statistic of a to-be-encoded point whose attribute prediction residual is zero.

Optionally, the attribute prediction mode includes a first-type prediction mode or a second-type prediction mode, and the processor 610 is specifically configured to:
encode the first identifier based on a first context or a second context, where the first context is a context for encoding the first identifier in the first-type prediction mode, and the second context is a context for encoding the first identifier in the second-type prediction mode;
   or
the processor 610 is specifically configured to:
   encode the second identifier based on a third context or a fourth context, where the third context is a context for encoding the second identifier in the first-type prediction mode, and the fourth context is a context for encoding the second identifier in the second-type prediction mode.

Optionally, the processor 610 is specifically configured to:
when a maximum attribute interpolation corresponding to the to-be-encoded point is less than a preset value, determine the attribute prediction mode of the attribute information of the to-be-encoded point as the first-type prediction mode; or
when a maximum attribute interpolation value corresponding to the to-be-encoded point is greater than or equal to a preset value, determine the attribute prediction mode of the attribute information of the to-be-encoded point as the second-type prediction mode.

Optionally, the attribute prediction mode includes k prediction modes, k is a positive integer, and the processor 610 is specifically configured to:
encode the first identifier based on k contexts;
   or
the processor 610 is specifically further configured to:
   encode the second identifier based on the k contexts, where
   the k contexts respectively indicate the k prediction modes.

Optionally, the processor 610 is specifically configured to:
when the maximum attribute interpolation corresponding to the to-be-encoded point is greater than or equal to the preset value, select the attribute prediction mode of the attribute information of the to-be-encoded point from the k prediction modes based on a rate-distortion optimization algorithm.

Herein, when the terminal is a decoder side,
the processor 610 is configured to:
determine an attribute prediction mode of attribute information of a to-be-decoded point; and
perform entropy decoding on an attribute prediction residual of the attribute information of the to-be-decoded point by using attribute prediction mode information as a context, to obtain a decoding result of the to-be-decoded point, where the attribute prediction mode information indicates the attribute prediction mode.

Optionally, the processor 610 is specifically configured to:
decode a first identifier by using the attribute prediction mode information as a context, where the first identifier indicates whether a to-be-decoded value corresponding to the attribute prediction residual of the attribute information of the to-be-decoded point is 0; and
when the first identifier indicates that the to-be-decoded value corresponding to the attribute prediction residual is not 0, decode a second identifier by using the attribute prediction mode information as a context, where the second identifier indicates whether the to-be-decoded value corresponding to the attribute prediction residual is 1; or
when the second identifier indicates that the to-be-decoded value corresponding to the attribute prediction residual is not 1, decode the to-be-decoded value corresponding to the attribute prediction residual.

Optionally, the processor 610 is further configured to:
decode a target parameter, where the target parameter indicates a continuous statistic of a to-be-decoded point whose attribute prediction residual is zero; and
the processor 610 is specifically configured to:
   decode the first identifier by using the attribute prediction mode information as the context when the target parameter is 0.

Optionally, the attribute prediction mode includes a first-type prediction mode or a second-type prediction mode, and the processor 610 is specifically configured to:
decode the first identifier based on a first context or a second context, where the first context is a context for decoding the first identifier in the first-type prediction mode, and the second context is a context for decoding the first identifier in the second-type prediction mode;
   or
the processor 610 is specifically configured to:
   decode the second identifier based on a third context or a fourth context, where the third context is a context for decoding the second identifier in the first-type prediction mode, and the fourth context is a context for decoding the second identifier in the second-type prediction mode.

Optionally, the processor 610 is specifically configured to:
when a maximum attribute interpolation corresponding to the to-be-decoded point is less than a preset value, determine the attribute prediction mode of the attribute information of the to-be-decoded point as the first-type prediction mode; or
when a maximum attribute interpolation value corresponding to the to-be-decoded point is greater than or equal to a preset value, determine the attribute prediction mode of the attribute information of the to-be-decoded point as the second-type prediction mode.

Optionally, the processor 610 is specifically configured to:
decode the first identifier based on k contexts;
   or
the processor 610 is specifically configured to:
   decode the second identifier based on the k contexts, where
   the k contexts respectively indicate the k prediction modes.

Optionally, the processor 610 is specifically configured to:
when the maximum attribute interpolation corresponding to the to-be-decoded point is greater than or equal to the preset value, select the attribute prediction mode of the attribute information of the to-be-decoded point from the k prediction modes based on a rate-distortion optimization algorithm.

This embodiment of this application can improve encoding efficiency.

Specifically, the terminal according to this embodiment of this application further includes instructions or a program that are/is stored in the memory 609 and runnable on the processor 610. The processor 610 calls the instructions or program in the memory 609 to execute the method executed by each module shown in FIG. 6 or FIG. 7, and can achieve a same technical effect. To avoid repetition, details are not described herein again.

An embodiment of this application further provides a readable storage medium, where the readable storage medium stores a program or instructions, and the program or instructions, when executed by a processor, implement various processes of the embodiment of the point cloud encoding processing method, or implement various processes of the embodiment of the point cloud decoding processing method, and may achieve a same technical effect. To avoid repetition, details are not described herein again.

The processor is the processor in the terminal in the foregoing embodiment. The readable storage medium includes a computer-readable storage medium, for example, a computer read-only memory ROM, a random access memory RAM, a magnetic disk, or an optical disk. In some examples, the readable storage medium may be a non-transitory readable storage medium.

An embodiment of this application further provides a chip, where the chip includes a processor and a communication interface, the communication interface is coupled to the processor, and the processor is configured to run a program or instructions, to implement various processes of the embodiment of the point cloud encoding processing method, or implement various processes of the embodiment of the point cloud decoding processing method, and may achieve a same technical effect. To avoid repetition, details are not described herein again.

It should be understood that the chip mentioned in embodiments of this application may also be referred to as a system-level chip, a system chip, a chip system, a system-on-chip, or the like.

An embodiment of this application further provides a computer program/program product, where the computer program/program product is stored in a storage medium, and the computer program/program product, when executed by at least one processor, implements various processes of the embodiment of the point cloud encoding processing method, or implements various processes of the embodiment of the point cloud decoding processing method, and may achieve a same technical effect. To avoid repetition, details are not described herein again.

An embodiment of this application further provides an encoding/decoding system, including: an encoder side device and a decoder side device, where the encoder side device may be configured to perform the steps of the foregoing point cloud encoding processing method, and the decoder side device may be configured to perform the steps of the foregoing point cloud decoding processing method.

It should be noted that in this specification, the term "include", "comprise", or any other variants thereof are intended to encompass in a non-exclusive mode, so that a process, a method, an object, or an apparatus including a series of elements not only includes those elements, but also includes other elements that are not explicitly listed, or elements that are inherent to such a process, a method, an object, or an apparatus. Without more limitations, elements defined by the sentence "including one" does not exclude that there are still other same elements in the processes, methods, objects, or apparatuses. In addition, it should be noted that a scope of the method and the apparatus in implementations of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

Through the description of the foregoing implementations, a person skilled in the art may clearly understand that the methods according to the foregoing embodiments may be implemented by a computer software product and a necessary general hardware platform, and certainly, may alternatively be implemented by hardware. The computer software product is stored in a storage medium (for example, a ROM/RAM, a magnetic disk, or an optical disc) and includes several instructions for instructing a terminal or a network side device to perform the methods described in embodiments of this application.

Embodiments of this application are described above with reference to the accompanying drawings. However, this application is not limited to the specific implementations described above, and the specific implementations described above are only exemplary and not limitative. A person of ordinary skill in the art may make various variations of embodiments under the teaching of this application without departing from the spirit of this application and the protection scope of the claims, and such embodiments shall all fall within the protection scope of this application.

## Claims

1. A point cloud encoding processing method, performed by an encoder side, wherein the method comprises:
determining an attribute prediction mode of attribute information of a to-be-encoded point;
obtaining an attribute prediction residual of the attribute information of the to-be-encoded point based on the attribute prediction mode; and
performing entropy encoding on the attribute prediction residual by using attribute prediction mode information as a context, to obtain an encoding result of the to-be-encoded point, wherein the attribute prediction mode information indicates the attribute prediction mode.

2. The method according to claim 1, wherein the performing entropy encoding on the attribute prediction residual by using attribute prediction mode information as a context comprises:
encoding a first identifier by using the attribute prediction mode information as a context, to obtain a first encoding result, wherein the first identifier indicates whether a to-be-encoded value corresponding to the attribute prediction residual is 0; and
when the to-be-encoded value corresponding to the attribute prediction residual is not 0, encoding a second identifier by using the attribute prediction mode information as a context, to obtain a second encoding result, wherein the second identifier indicates whether the to-be-encoded value corresponding to the attribute prediction residual is 1; or
when the to-be-encoded value corresponding to the attribute prediction residual is neither 0 nor 1, encoding the to-be-encoded value corresponding to the attribute prediction residual, to obtain a third encoding result, wherein
the encoding result of the to-be-encoded point includes at least one of the first encoding result, the second encoding result, or the third encoding result.

3. The method according to claim 2, wherein before the encoding a first identifier by using the attribute prediction mode information as a context, the method further comprises:
when the attribute prediction residual is 0, updating a target parameter, wherein an updated target parameter is the target parameter before the update plus 1; and
the encoding a first identifier by using attribute prediction mode information as a context comprises:
when the attribute prediction residual is not 0, encoding the target parameter and encoding the first identifier by using the attribute prediction mode information as the context, wherein
the target parameter indicates a continuous statistic of a to-be-encoded point whose attribute prediction residual is zero.

4. The method according to claim 2, wherein the attribute prediction mode comprises a first-type prediction mode or a second-type prediction mode, and the encoding a first identifier by using attribute prediction mode information as a context comprises:
encoding the first identifier based on a first context or a second context, wherein the first context is a context for encoding the first identifier in the first-type prediction mode, and the second context is a context for encoding the first identifier in the second-type prediction mode; or
the encoding a second identifier by using the attribute prediction mode information as a context comprises:
encoding the second identifier based on a third context or a fourth context, wherein the third context is a context for encoding the second identifier in the first-type prediction mode, and the fourth context is a context for encoding the second identifier in the second-type prediction mode.

5. The method according to claim 4, wherein the determining an attribute prediction mode of attribute information of a to-be-encoded point comprises:
when a maximum attribute interpolation corresponding to the to-be-encoded point is less than a preset value, determining the attribute prediction mode of the attribute information of the to-be-encoded point as the first-type prediction mode; or
when a maximum attribute interpolation value corresponding to the to-be-encoded point is greater than or equal to a preset value, determining the attribute prediction mode of the attribute information of the to-be-encoded point as the second-type prediction mode.

6. The method according to claim 2, wherein the attribute prediction mode comprises k prediction modes, k is a positive integer, and the encoding a first identifier by using attribute prediction mode information as a context comprises:
encoding the first identifier based on k contexts; or
the encoding a second identifier by using the attribute prediction mode information as a context comprises:
encoding the second identifier based on the k contexts, wherein
the k contexts respectively indicate the k prediction modes.

7. The method according to claim 6, wherein the determining an attribute prediction mode of attribute information of a to-be-encoded point comprises:
when the maximum attribute interpolation corresponding to the to-be-encoded point is greater than or equal to the preset value, selecting the attribute prediction mode of the attribute information of the to-be-encoded point from the k prediction modes based on a rate-distortion optimization algorithm.

8. A point cloud decoding processing method, performed by a decoder side, wherein the method comprises:
determining an attribute prediction mode of attribute information of a to-be-decoded point; and
performing entropy decoding on an attribute prediction residual of the attribute information of the to-be-decoded point by using attribute prediction mode information as a context, to obtain a decoding result of the to-be-decoded point, wherein the attribute prediction mode information indicates the attribute prediction mode.

9. The method according to claim 8, wherein the performing entropy decoding on an attribute prediction residual of the attribute information of the to-be-decoded point by using attribute prediction mode information as a context comprises:
decoding a first identifier by using the attribute prediction mode information as a context, wherein the first identifier indicates whether a to-be-decoded value corresponding to the attribute prediction residual of the attribute information of the to-be-decoded point is 0; and
when the first identifier indicates that the to-be-decoded value corresponding to the attribute prediction residual is not 0, decoding a second identifier by using the attribute prediction mode information as a context, wherein the second identifier indicates whether the to-be-decoded value corresponding to the attribute prediction residual is 1; or
when the second identifier indicates that the to-be-decoded value corresponding to the attribute prediction residual is not 1, decoding the to-be-decoded value corresponding to the attribute prediction residual.

10. The method according to claim 9, wherein before the decoding a first identifier by using the attribute prediction mode information as a context, the method further comprises:
decoding a target parameter, wherein the target parameter indicates a continuous statistic of a to-be-decoded point whose attribute prediction residual is zero; and
the decoding a first identifier by using the attribute prediction mode information as a context comprises:
decoding the first identifier by using the attribute prediction mode information as the context when the target parameter is 0.

11. The method according to claim 9, wherein the attribute prediction mode comprises a first-type prediction mode or a second-type prediction mode, and the decoding a first identifier by using attribute prediction mode information as a context comprises:
decoding the first identifier based on a first context or a second context, wherein the first context is a context for decoding the first identifier in the first-type prediction mode, and the second context is a context for decoding the first identifier in the second-type prediction mode; or
the decoding a second identifier by using the attribute prediction mode information as a context comprises:
decoding the second identifier based on a third context or a fourth context, wherein the third context is a context for decoding the second identifier in the first-type prediction mode, and the fourth context is a context for decoding the second identifier in the second-type prediction mode.

12. The method according to claim 11, wherein the determining an attribute prediction mode of attribute information of a to-be-decoded point comprises:
when a maximum attribute interpolation corresponding to the to-be-decoded point is less than a preset value, determining the attribute prediction mode of the attribute information of the to-be-decoded point as the first-type prediction mode; or
when a maximum attribute interpolation value corresponding to the to-be-decoded point is greater than or equal to a preset value, determining the attribute prediction mode of the attribute information of the to-be-decoded point as the second-type prediction mode.

13. The method according to claim 9, wherein the attribute prediction mode comprises k prediction modes, k is a positive integer, and the decoding a first identifier by using the attribute prediction mode information as a context comprises:
decoding the first identifier based on k contexts; or
the decoding a second identifier by using the attribute prediction mode information as a context comprises:
decoding the second identifier based on the k contexts, wherein
the k contexts respectively indicate the k prediction modes.

14. The method according to claim 13, wherein the determining an attribute prediction mode of attribute information of a to-be-decoded point comprises:
when the maximum attribute interpolation corresponding to the to-be-decoded point is greater than or equal to the preset value, selecting the attribute prediction mode of the attribute information of the to-be-decoded point from the k prediction modes based on a rate-distortion optimization algorithm.

15. A point cloud encoding processing apparatus, comprising:
a determining module, configured to determine an attribute prediction mode of attribute information of a to-be-encoded point;
an obtaining module, configured to obtain an attribute prediction residual of the attribute information of the to-be-encoded point based on the attribute prediction mode; and
an encoding module, configured to perform entropy encoding on the attribute prediction residual by using attribute prediction mode information as a context, to obtain an encoding result of the to-be-encoded point, wherein the attribute prediction mode information indicates the attribute prediction mode.

16. A point cloud decoding processing apparatus, comprising:
a determining module, configured to determine an attribute prediction mode of attribute information of a to-be-decoded point; and
a decoding module, configured to perform entropy decoding on an attribute prediction residual of the attribute information of the to-be-decoded point by using attribute prediction mode information as a context, to obtain a decoding result of the to-be-decoded point, wherein the attribute prediction mode information indicates the attribute prediction mode.

17. A terminal, comprising a processor, a memory, and a program or instructions that are stored on the memory and that can be run on the processor, wherein when the program or the instructions is/are executed by the processor, the steps of the point cloud encoding processing method according to any one of claims 1 to 7 are implemented, or when the program or the instruction are executed by the processor, the steps of the point cloud decoding processing method according to any one of claims 8 to 14 are implemented.

18. A readable storage medium, wherein the readable storage medium stores a program or instructions, and when the program or the instructions is/are executed by a processor, the steps of the point cloud encoding processing method according to any one of claims 1 to 7 are implemented, or when the program or the instructions is/are executed by a processor, the steps of the point cloud decoding processing method according to any one of claims 8 to 14 are implemented.

19. A computer program product, wherein the computer program product is stored in a storage medium, and when the computer program product is executed by a processor, the steps of the point cloud encoding processing method according to any one of claims 1 to 7 are implemented, or when the computer program product or the instructions is/are executed by a processor, the steps of the point cloud decoding processing method according to any one of claims 8 to 14 are implemented.
